# EUROPEAN PATENT APPLICATION

(11) **EP 4 328 076 A1**
(43) Date of publication of application: **28.02.2024**
(21) Application number: 22191458.3
(22) Date of filing: 22.08.2022
(51) Int. Cl.: B60L 53/16, B60L 53/66

(54) **COMPUTER PROGRAM, VEHICLE, APPARATUS, AND METHODS FOR UNLOCKING AND/OR OPENING A CHARGING/TANK COVER OF A VEHICLE**

(71) Applicant: Bayerische Motoren Werke Aktiengesellschaft, 80809 München (DE)
(72) Inventor: Mourad, Alaa, 80995 München (DE); Knott, Thorsten, 83104 Tuntenhausen (DE)

(57) **Abstract**

Embodiments relate to a computer program, an apparatus (400), a vehicle (310), and methods (100, 200) for unlocking and/or opening a charging/tank cover of a vehicle (310). A method (100) for a vehicle (310) and for unlocking and/or opening a charging/tank cover of the vehicle (310) comprises receiving (110) a BLE signal from a charging/fuel station (320) for the vehicle (310) and unlocking and/or opening (120) the charging/tank cover based on the BLE signal.

## Description

Embodiments of the present disclosure relate to a computer program, an apparatus, a vehicle, and methods for unlocking and/or opening a charging/tank cover of a vehicle. In particular, embodiments of the present disclosure relate to a concept for unlocking and/or opening a charging/tank cover using Bluetooth-Low-Energy (BLE) -based positioning.

In practice, vehicles, be it electric vehicles or vehicles driven by an internal combustion engine (ICE), have a cover or a lid covering a socket or a tank opening for protection. So, when a diver arrives at a charging or fuel station, he/she has to unlock and open a charging/tank cover manually to connect a charging plug or insert a tank nozzle. However, this may be impractical and time consuming.

Hence, there may be a demand for an improved concept for unlocking and/or opening a charging/tank cover.

This demand may be satisfied by the subject-matter of the appended independent and dependent claims.

Embodiments are based on the finding that a charging/tank cover of a vehicle may be unlocked and/or opened automatically when the vehicle is close or within a certain distance to a charging/fuel station in order to facilitate charging/fueling the vehicle. Another finding is that BLE-based positioning approaches may provide a higher accuracy than GPS-based approaches which may be too inaccurate in order to determine whether the vehicle is this close to the charging/fuel station and, thus, not sufficiently reliable. One idea of the present disclosure, hence, is to determine the vehicle's distance to a charging/fuel station using BLE and open/unlock the charging/tank cover if the vehicle is within a predefined distance in order to improve the user experience when charging or fueling the vehicle. In order to do so, it is particularly proposed to make use of the distance-dependent attenuation of BLE signals and reliably determine the distance based on a signal strength of a BLE signal from the charging/fuel station.

Embodiments provide a method for a vehicle and for unlocking and/or opening a charging/tank cover of the vehicle. The method comprises receiving a BLE signal from a charging/fuel station for the vehicle and unlocking and/or opening the charging/tank cover based on the BLE signal. In this way, the charging/tank cover may be unlocked/opened automatically. Hence, charging/fueling the car may be facilitated and the user experience when charging/fueling the vehicle may be enhanced.

Unlocking and/or opening the charging/tank cover may comprise determining a signal strength of the BLE signal and unlocking and/or opening the charging/tank cover if the signal strength is equal to or greater than a predefined threshold for the signal strength. In this way, a distance between the vehicle and the charging/fuel station may be determined and the charging/tank cover may be only unlocked and/or opened if the vehicle is within a desired or predefined distance to the charging/fuel station. This, e.g., avoid that the charging/tank cover is opened and/or unlocked in inopportune situations when the vehicle is farther away from the charging/fuel station.

In some embodiments, the method further comprises transmitting at least one advertisement message to the charging/fuel station for the charging/fuel station to respond to the advertisement message with the BLE signal. So, the charging/fuel station may only emit the BLE signal if the vehicle is close enough such that the charging/fuel station does not need to emit BLE signals continuously. Hence, the use of the advertisement message may save energy. Also, advertisement messages may be used in the vehicle anyway, e.g., for communicating with user devices, and, in this, way, may serve another function for an increased functional density.

In practice, transmitting at least one advertisement message may comprise transmitting multiple advertisement messages within a predefined time interval. In practice, the advertisement message may be is indicative of a charging identifier indicating that charging/fueling is desired. In this way, the vehicle indicates to the charging/fuel station whether charging or fueling is desired and, thus, whether the BLE signal for opening/unlocking the charging/tank cover is desired. So, the advertisement message, in practice, allows the charging/fuel station to determine based on the advertisement message if fueling/charging is desired and provide the BLE signal only if fueling/charging is desired. In this way, it may be avoided that the charging/fuel station continuously emits BLE signals and, thus, may save resources. The charging identifier may be embedded in the advertisement message. In practice, the charging identifier may be a universally unique identifier (UUID). The predefined time interval, e.g., corresponds to a defined time interval after a driver or passenger got out of the vehicle such that the advertisement message is not transmitted continuously or, in applications where the advertisement message is transmitted continuously, the charging identifier is only added to the advertisement message for a limited amount of time.

In some embodiments, the method further comprises determining information on a charge/fuel level, and wherein transmitting the advertisement message comprises transmitting the advertisement message if the charge/fuel level is lower than a predefined charge/fuel threshold. In this way, the vehicle may only send the advertisement message if charging/fueling is needed in order to save resources.

In some embodiments, the method further comprises determining whether a user is within a predefined distance to the vehicle or the charging/tank cover and unlocking and/or opening the charging/tank cover comprises unlocking and/or opening the charging/tank cover if the user is within the predefined distance. In this way, it may be avoided that others have access to the tank or charging socket while the user is far away from the vehicle, e.g., when paying at the counter after fueling/charging.

Further embodiments provide a method for a charging/fuel station for vehicles and unlocking and/or opening a charging/tank cover of a vehicle. The method comprises receiving an advertisement message from the vehicle and transmitting, in response to the advertisement message, a BLE signal for unlocking and/or opening the charging/tank cover, by the vehicle, based on the BLE signal.

The method may further comprise obtaining a charging identifier indicating that charging/fueling is desired and checking whether the advertisement message is indicative of the charging identifier. Then, transmitting the BLE signal may comprise transmitting the BLE signal if the advertisement message is indicative of the charging identifier.

In practice, the BLE signal may comprise a scan request.

Further embodiments provide a computer program having a program code for performing at least one of the methods proposed herein, when the computer program is executed on a computer, a processor, or a programmable hardware component.

Still further embodiments provide an apparatus comprising one or more interfaces for communication and a data processing circuit configured to control the one or more interfaces; and execute, using the one or more interfaces, one of the methods proposed herein.

Other embodiments provide a vehicle or a charging/fuel station comprising the apparatus proposed herein.

Some examples of apparatuses, methods and/or computer programs will be described in the following by way of example only, and with reference to the accompanying figures, in which
Fig. 1 shows a flow chart schematically illustrating an embodiment of a method for a vehicle and for unlocking and/or opening a charging/tank cover of the vehicle;
Fig. 2 shows a flow chart schematically illustrating an embodiment of a method for a charging/fuel station for vehicles and unlocking and/or opening a charging/tank cover of a vehicle;
Fig. 3 schematically illustrates an exemplary use case of the proposed concept; and
Fig. 4 shows a block diagram schematically illustrating an apparatus according to the proposed concept.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

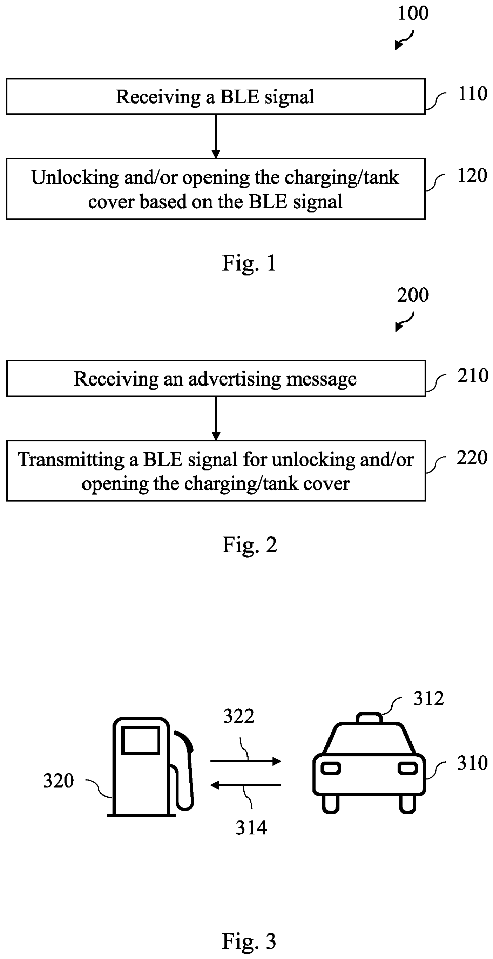

Fig. 1 shows a flow chart schematically illustrating an embodiment of a method 100 for a vehicle and for unlocking and/or opening a charging/tank cover of the vehicle.

In context of the present disclosure, the vehicle can be any kind of vehicle. In embodiments, the vehicle is a car, a truck, a bus, a farm machine, a construction vehicle, or the like. In particular, the vehicle can be any electric or "fuel-powered" vehicle. The charging/tank cover may be any lid, cap, or other protection that is unlocked and/or opened in order to fuel or charge the vehicle. So, the charging/tank cover, e.g., comprises a charging cover that covers a charging socket for charging the vehicle or a tank cover that covers a tank mouth/opening for fueling the vehicle or another cap of the tank mouth/opening. In embodiments, the tank cover, e.g., covers a screw cap that closes the tank mouth/opening. In practice, the tank cover may for any type of tank in the vehicle. So, examples of the tank cover may not only comprise a tank cover for a fuel tank but also a tank cover for an oil tank, wiper water tank, cooling water tank, or the like. So, in context of the present disclosure "charging/tank cover" may be understood as any of the above examples or equivalents thereof.

So far, charging or tank covers of vehicles may need to be unlocked and/or opened manually which makes charging or fueling inconvenient. One basic idea of the present disclosure is to unlock and/or open the charging/tank cover automatically just before fueling or charging the vehicle.

For this, method 100 comprises receiving 110 a BLE signal from a charging/fuel station for the vehicle and unlocking and/or opening 120 the charging/tank cover based on the BLE signal. The BLE signal, in practice, may indicate that fueling or charging is imminent and, thus, enables the vehicle to determine whether it is appropriate to unlock and/or open the charging/tank cover. In practice, the vehicle, e.g., may determine from a signal strength of the BLE signal and/or from a content transmitted by the BLE signal whether it is appropriate to unlock and/or open the charging/tank cover.

In embodiments, the charging/tank cover is coupled to a mechanism for locking/unlocking and/or closing/opening the charging/tank cover and the vehicle may be equipped with one or more actuators that are configured to unlock and/or open the charging/tank cover. In practice, the mechanism may comprise a hinge that connects the charging/tank cover with the vehicle and the actuator/s may be configured to lift the charging/tank cover, e.g., by rotating the charging/tank cover around the hinge. In some embodiments, the mechanism may alternatively or additionally comprise a lock which is configured to lock and/or unlock the charging/tank cover. In those kind of embodiments, the method 100 may alternatively or additionally provide for unlocking the charging/tank cover. In order to do so, the actuator/s may be configured to unlock (and lock) the charging/tank cover. A skilled person having benefit from the present disclosure will appreciate that the mechanism may be or comprise any other kind of mechanisms, e.g., a sliding mechanism and that embodiments of the present disclosure are not limited to a specific kind of mechanism or actuator.

The skilled person having benefit from the present disclosure will also appreciate that method 100 may be also applied for a plurality of charging/tank covers, e.g., in a plug-in hybrid vehicle exhibiting a charging cover for a charging socket and a tank cover for a fuel tank of the plug-in hybrid vehicle.

In embodiments, method 100, e.g., is executed by a data processing circuit which is configured to receive the BLE signal (from an appropriate sensor) and control/operate the charging/tank cover. So, for unlocking and/or opening such a data processing circuit may make the actuator to unlock and/or open the charging/tank cover.

It is noted that the charging/fuel station may be any kind of device or apparatus for charging and/or fueling the vehicle. Examples of such a charging/fuel station comprise commercial or public charging/fuel stations as well as private home charging/fuel stations.

For fueling or charging, the vehicle typically approaches the charging/fuel station to get within a certain distance for charging/fueling. Usually, the vehicle approaches at least so far that the vehicle is in range of a charging cable or a fuel hose. So, one idea of the present disclosure for opening and/or unlocking the charging/tank cover when/if the vehicle is to be fueled of charged, is to determine a relative position of the vehicle and unlock and/or open the charging/tank cover based on the relative position. To this end, it is proposed to determine a distance between the vehicle and the charging/tank cover and unlock and/or open the charging/tank cover if the distance is equal to or smaller than a predefined distance. In practice, the range of charging cables and fuel hoses is only a few meters, usually less than 3 or 4 meters. So, in order to determine whether the vehicle is to be fueled or charged, the distance may need to be determined to the meter or less. However, GPS-based positioning approaches may be less accurate and, thus, may fail to provide a sufficient accuracy. One finding of the present disclosure is that BLE provides a higher accuracy than GPS-based approaches. Method 100, hence, provides for determining the distance of the vehicle to the charging/fuel station using BLE.

As the skilled person will appreciate, BLE provides various techniques for positioning. BLE, e.g., provides time-of-flight-based positioning approaches, wherein time stamps of messages are exchanged. As well, BLE provides signal-strength-based positioning. The skilled person will appreciate that the latter one may be more accurate and easier to implement in embodiments of the present disclosure. Hence, signal-strength-based positioning may be preferred in embodiments of the present disclosure.

In embodiments, e.g., unlocking and/or opening the charging/tank cover, e.g., comprises determining a signal strength of the BLE signal and unlocking and/or opening the charging/tank cover if the signal strength is equal to or greater than a predefined threshold for the signal strength. The threshold, e.g., is such that the signal strength is equal to or greater than the threshold if the vehicle is withing a predefined distance to the charging/fuel station. The predefined distance may be distance that the vehicle usually only falls below when/if the vehicle is charged or fueled. As mentioned above, the charging cable or tank hose may have a range of a few meters or less than 3 to 4 meters. Hence, the predefined distance may be a few meters (e.g., 3 or 4 meters).

In other embodiments, it may be already assumed that the vehicle is to be charged or fueled if the vehicle is in range for receiving the BLE signal and, optionally, identify the BLE signal as a BLE signal from the charging/fuel station.

According to some embodiments, it is proposed that the vehicle also emits a signal to indicate to the charging/fuel station that the vehicle is close (within a range for communication) to the charging/fuel station in order to avoid that the charging/fuel station has to transmit BLE signals continuously to ensure that a BLE signal is transmitted when a vehicle is close enough to receive it.

For this, method 100 may further comprise transmitting at least one advertisement message to the charging/fuel station for the charging/fuel station to respond to the advertisement message with the BLE signal. In practice, the vehicle may transmit such advertisement messages repeatedly and, optionally, regularly. The advertisement message, e.g., comprises payload including one or more so-called service class UUIDs. The present disclosure proposes to add a charging UUID indicating that the vehicle is to be charged and/or fueled. In this way, the vehicle indicates to the charging/fuel station via the advertisement message if the vehicle is to be fueled and/or charged. In embodiments, the charging/fuel station, then, may check whether the advertisement message is indicative of the charging UUDI and may (only) respond with the BLE signal if the advertisement message is indicative of the charging UUID. Accordingly, it is proposed that the vehicle only includes the charging UUID in the advertisement message if it is to be fueled and/or charged. Hence, advertisement messages may be ignored by the charging/fuel station when the vehicle is not to be fueled and/or charged in order to save resources.

For this, the vehicle, e.g., (only) transmits the advertisement message and/or includes the charging UUID in a predefined time interval. The predefined time interval, e.g., is a time interval in which the vehicle is usually fueled and/or charged. One finding of the proposed concept is that the vehicle is usually fueled and/or charged in a predefined time interval after a driver or passenger of the vehicle stepped out of the vehicle for fueling/charging. In embodiments, the time interval, e.g., is a predefined time interval after a driver or passenger opened a vehicle door of the vehicle. The time interval, e.g., is a few tens of seconds or a few minutes.

As the skilled person will appreciate, the charging UUID does not need to be a UUID but can be also any other identifier indicating that fueling/charging is desired.

The skilled person having benefit from the present disclosure will also appreciate that transmitting the advertisement message to the charging/fuel station and/or adding the UUID to the advertisement message may additionally or alternatively depend on other indicators indicating whether the vehicle is to be fueled/charged or not.

In practice, this, e.g., depends on a charge and/or fuel level of the vehicle.

Accordingly, method 100 may comprise determining information on a charge/fuel level and transmitting the advertisement message comprises transmitting the advertisement message (only) if the charge/fuel level is lower than a predefined charge/fuel threshold. The information on the charge/fuel level, e.g., indicates how much energy is stored in a (traction) battery of the vehicle and/or how much fuel is in the tank. The charge/fuel threshold may be such that fueling/charging is appropriate if the charge/fuel level falls short of the threshold. In practice, the threshold, e.g., is between 15% and 40% of a capacity of the (traction) battery and/or the fuel tank. In embodiments, the threshold may be also higher or lower.

Additionally or alternatively, method 100 may further comprise determining whether a user is within a predefined distance to the vehicle or the charging/tank cover. Unlocking and/or opening the charging/tank cover, then, may comprise unlocking and/or opening the charging/tank cover (only) if the user is within the predefined distance.

For determining whether the user is within the predefined distance, various positioning or presence detection approaches may be used. In practice, e.g., BLE-based positioning and/or motion detection may be applied. Alternatively, a distance or presence of the user is detected by an appropriate access token from the user.

In practice, only one, multiple, or even all of the above requirements may need to be met in order that the charging/tank cover is unlocked and/or opened. In embodiments, the charging/tank cover, e.g., is only unlocked and/or opened if the user is within the predefined distance and (only) within the predefined time interval.

Method 100, e.g., is executed in/by the vehicle, e.g., by an appropriately configured data processing circuit installed in the vehicle.

The skilled person having benefit from the present disclosure will understand that method 100 may be executed in connection with an interrelated complementary method for a charging/fuel station, as described in more detail below with reference to Fig. 2.

Fig. 2 shows a flow chart schematically illustrating an embodiment of a method 200 for a charging/fuel station for vehicles and unlocking and/or opening a charging/tank cover of a vehicle.

Method 200 comprises receiving 210 an advertisement message from the vehicle and transmitting 220, in response to the advertisement message, a BLE signal for unlocking and/or opening the charging/tank cover, by the vehicle, based on the BLE signal.

For this, the charging/fuel station may be equipped with appropriate technology for receiving the advertisement message and transmitting the BLE signal. In practice, the charging/fuel station, e.g., includes an BLE receiver, transmitter, and/or transceiver.

By the advertisement message, the charging/fuel station may recognize that the vehicle is in range for communication and, thus, can use the BLE signal for unlocking and/or opening the charging/tank cover according to method 100. In this way, the vehicle is enabled to unlock and/or open the charging/tank cover and additional BLE signals may be avoided when the vehicle is not in range.

As mentioned above, the advertisement message may include a charging identifier, e.g., the UUID, indicating that charging/fueling is desired. Then, the charging/fuel station may only respond with the BLE signal if the advertisement message is indicative of the charging identifier.

For this, method 200 may further comprise obtaining a charging identifier indicating that charging/fueling is desired and checking whether the advertisement message is indicative of the charging identifier. Then, the BLE signal may be (only) transmitted if the advertisement message is indicative of the charging identifier.

For obtaining the charging identifier, the charging identifier may be saved in the charging/fuel station or provided to the charging/fuel station from outside, e.g., from a backend.

In order to indicate to the vehicle that the BLE signal serves for unlocking and/or opening the charging/tank cover, the charging/fuel station may include the charging identifier, e.g., the UUID, in the BLE signal such that the BLE signal is indicative of the charging identifier. In this way, the vehicle may be informed that the BLE signal may be used according to method 100.

In practice, the BLE signal may comprise or correspond to a (BLE) scan request that allows communication with the vehicle without previously establishing a connection to the vehicle. The skilled person, however, will appreciate that the BLE signal may be any BLE signal.

Features and aspects of the present disclosure shall be explained in more detail with reference to an exemplary use case depicted by Fig. 3.

Fig. 3 schematically illustrates an exemplary use case of the proposed concept, where the proposed methods 100 and 200 are executed in a vehicle 310 and a charging station 320.

Vehicle 310 is equipped with one or more BLE nodes 312 that may be also used for digital car key applications according to specification "Digital Key Release X (X is representative for any specification version)" of the car connectivity consortium. According to this specification, vehicle 310 the BLE nodes may advertise (send advertisement messages) after a user pairs his/her device with vehicle 310.

In the present example, vehicle 310, e.g., parks next to charging station 320 for charging. Then, a driver or any other passenger may open a vehicle door of vehicle 310 (for charging vehicle 310). Consequently, vehicle 310 adds a charging UUID indicating that vehicle 310 may be charged to advertisement messages sent by vehicle 310 for a predefined time interval, e.g., a few minutes (optionally: under the condition that a charge level of a traction battery of vehicle 310 is below a predefined threshold, e.g., below 30%). In doing so, vehicle 310 transmits an advertisement message indicative of the UUID to charging station 320. Meanwhile, charging station 320 may scan (according to a predefined duty cycle) for the charging UUID (advertisement messages with the charging UUID) and such an advertisement message from the vehicle is received (as in the present case), charging station 320 sends BLE signal including a scan request (as indicated by the arrow numbered "322") to the vehicle including the same charging UUID.

Vehicle 310 receives the scan request, checks whether the scan request includes the charging UUID and whether the scan request indicates that vehicle 310 is within a predefined distance to charging station 320. For this, vehicle 310 may compare the scan request to the charging UUID included in the advertisement message. Further, vehicle 310 determines a Received Signal Strength Indicator (RSSI) indicating a signal strength from the scan request and compares the RSSI with a predefined threshold for the signal strength that is such that the RSSI is equal to or higher than the threshold if vehicle 310 is within the aforementioned predefined distance. Then, if the scan request is indicative of the charging UUID and if vehicle 310 is within the predefined distance to charging station 320, vehicle 310 may control an actuator to unlock and/or open a charging cover of a charging socket of vehicle 310 such that the driver or passenger charging vehicle 310 does not need to do so manually. In embodiments, the charging cover may be unlocked and/or opened immediately. In other embodiments, the charging cover may be unlocked and/or opened only if/when the driver or passenger is detected within a predefined distance to the vehicle and/or charging cover.

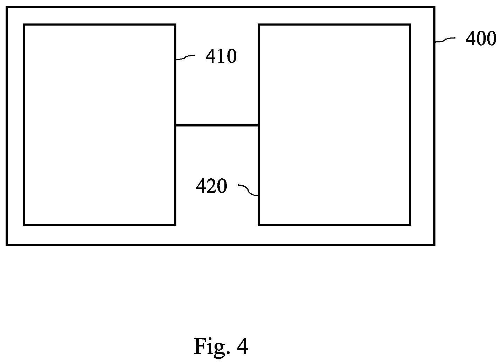

As the skilled person having benefit from the present disclosure will appreciate, the proposed concept may be implemented in an apparatus (for a vehicle or a charging/fuel station), as outlined below in more detail with reference to Fig. 4.

Fig. 4 shows a block diagram schematically illustrating an embodiment of an apparatus 300 implementing the proposed concept.

As can be seen from Fig. 4, apparatus 400 comprises one or more interfaces 410 for communication and a data processing circuit 420 configured to control the one or more interfaces 410. The data processing circuit 420 is further configured to control the one or more interfaces 410 and execute, using the one or more interfaces 410, an embodiment of method 100 or method 200.

In embodiments the one or more interfaces 410 may comprise means for communication with vehicles or another server. For this, the one or more interfaces 410 may comprise or correspond to any means for obtaining, receiving, transmitting, or providing analog or digital signals or information, e.g., any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 410 may comprise further components to enable appropriate communication, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, and/or the like. The one or more interfaces 410 may be coupled to one or more antennas, which may correspond to any transmit and/or receive antennas, such as horn antennas, dipole antennas, patch antennas, sector antennas, and/or the liked. The antennas may be arranged in a defined geometrical setting, such as a uniform array, a linear array, a circular array, a triangular array, a uniform field antenna, a field array, combinations thereof, and/or the like.

As shown in Fig. 4, the one or more interfaces 410 are coupled to the data processing circuit 420. In embodiments the data processing circuit 420 may comprise any means for processing information according to the proposed method. The data processing circuit 420 may be implemented using one or more processing units, one or more processing devices, any means for processing, such as a processor, a computer or a programmable hardware component being operable with accordingly adapted software. In other words, the described functions of the data processing circuit 420 may as well be implemented in software, which is then executed on one or more programmable hardware components. Such hardware components may comprise a general-purpose processor, a Digital Signal Processor (DSP), a micro-controller, and/or the like.

A person of skill in the art would readily recognize that steps of various above-described methods can be performed by programmed computers. In some embodiments, the apparatus may also comprise program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art and are to be construed as being without limitation to such specifically recited examples and conditions. Moreover, all statements herein reciting principles, aspects, and embodiments of the invention, as well as specific examples thereof, are intended to encompass equivalents thereof.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of those.

The apparatus 400, in practice, may be implemented in a charging/fuel station (e.g., charging station 320) or a vehicle (e.g., vehicle 310).

### References

- 100: Method for a vehicle
- 110: Receiving a BLE signal
- 120: Unlocking and/or opening the charging/tank cover based on the BLE signal
- 200: Method for a charging/fuel station
- 210: Receiving an advertising message
- 220: Transmitting a BLE signal for unlocking and/or opening the charging/tank cover
- 310: Vehicle
- 312: One or more BLE nodes
- 314: Arrow
- 320: Charging station
- 400: Apparatus for a vehicle or a charging/fuel station
- 410: One or more interfaces
- 420: Data processing circuit

## Claims

1. A method (100) for a vehicle (310) and for unlocking and/or opening a charging/tank cover of the vehicle (310), the method (100) comprising:
receiving (110) a BLE signal from a charging/fuel station (320) for the vehicle (310); and
unlocking (120) and/or opening the charging/tank cover based on the BLE signal.

2. The method (100) of claim 1, wherein unlocking (120) and/or opening the charging/tank cover comprises:
determining a signal strength of the BLE signal; and
unlocking and/or opening the charging/tank cover if the signal strength is equal to or greater than a predefined threshold for the signal strength.

3. The method (100) of any one of the preceding claims, wherein the method (100) further comprises transmitting at least one advertisement message to the charging/fuel station (320) for the charging/fuel station (320) to respond to the advertisement message with the BLE signal.

4. The method (100) of claim 3, wherein transmitting at least one advertisement message comprises transmitting multiple advertisement messages within a predefined time interval.

5. The method (100) of claim 3 or 4, wherein the method (100) further comprises determining information on a charge/fuel level, and wherein transmitting the advertisement message comprises transmitting the advertisement message if the charge/fuel level is lower than a predefined charge/fuel threshold.

6. The method (100) of any one of the claims 3 to 5, wherein the advertisement message is indicative of a charging identifier indicating that charging/fueling is desired.

7. The method (100) of claim 6, wherein the identifier is a universally unique identifier, UUID.

8. The method (100) of any one of the preceding claims, wherein the method (100) further comprises determining whether a user is within a predefined distance to the vehicle (310) or the charging/tank cover, and wherein unlocking and/or opening (120) the charging/tank cover comprises unlocking and/or opening the charging/tank cover if the user is within the predefined distance.

9. A method (200) for a charging/fuel station (320) for vehicles and unlocking and/or opening a charging/tank cover of a vehicle (310), the method (200) comprising:
receiving (210) an advertisement message from the vehicle (310); and
transmitting (220), in response to the advertisement message, a BLE signal for unlocking and/or opening the charging/tank cover, by the vehicle (310), based on the BLE signal.

10. The method (200) of claim 9, wherein the method (200) further comprises
obtaining a charging identifier indicating that charging/fueling is desired; and
checking whether the advertisement message is indicative of the charging identifier,
and wherein transmitting (220) the BLE signal comprises transmitting the BLE signal if the advertisement message is indicative of the charging identifier.

11. The method (200) of claim 9 or 10, wherein the BLE signal comprises a scan request.

12. A computer program having a program code for performing at least one of the methods (100, 200) of the preceding claims, when the computer program is executed on a computer, a processor, or a programmable hardware component.

13. An apparatus (400) comprising:
one or more interfaces (410) for communication; and
a data processing circuit (420) configured to:
control the one or more interfaces (410); and
execute, using the one or more interfaces (410), one of the methods (100, 200) of the claims 1 to 11.

14. A vehicle (310) comprising the apparatus (400) of claim 13.

15. A charging/fuel station (320) comprising the apparatus (400) of claim 13.
